# FASCICULE DE BREVET EUROPEEN

(11) **EP 0 338 876 B1**
(45) Date de publication et mention de la délivrance du brevet: **28.07.1993**
(21) Numéro de dépôt: 89400814.3
(22) Date de dépôt: 23.03.1989
(51) Int. Cl.: G02F 1/17, B60J 7/00

(54) **Vitrage à transmission variable du type électrochrome**
Elektrochromes Fensterglas mit variabler Transmission
Electrochromic variable transmission window

(30) Priorité: 25.03.1988 FR 8803940
(43) Date de publication de la demande: 25.10.1989
(73) Titulaire: SAINT-GOBAIN VITRAGE INTERNATIONAL, 92400 Courbevoie (FR)
(72) Inventeur: Arribart, Hervé, F-95230 Soisy sous Montmorency (FR); Padoy, Christian, F-95500 Gonesse (FR); Buffat, Bernard, F-75010 Paris (FR); Reboul-Salze, Véronique, F-95540 Mery sur Oise (FR)
(74) Mandataire: Menes, Catherine

(56) Documents cités:
- EP-A- 0 044 392
- EP-A- 0 253 713
- DE-A- 3 514 281
- GB-A- 2 086 601
- US-A- 4 664 934
- SOLAR ENERGY MATERIALS, vol. 16, no. 5, novembre 1987, pages 371-382, Elsevier Science Publishers B.V., Amsterdam, NL; S.F. COGAN et al.: "Solar modulation in a-WO3/a-IrO2 and c-KxWO3+(x/2)/a-IrO2 complementary electrochromic windows"
- PATENT ABSTRACTS OF JAPAN, vol. 9, no. 327 (P-415)[2050], 21 décembre 1985 & JP-A-60 151 616 (CANON K.K.) 09-08-1985
- PATENT ABSTRACTS OF JAPAN, vol. 12, no. 224 (P-721)[3071], 25 juin 1988, page 78 P 721 & JP-A-63 18 335 (TOKUYAMA SODA CO. LTD) 26-01-1988

## Description

La présente invention a pour objet un vitrage à transmission variable du type électrochrome. Plus précisément, l'invention concerne un vitrage feuilleté dont la transmission lumineuse est modifiée par application d'une différence de potentiel électrique. L'invention s'applique à la réalisation de vitrages pour le bâtiment ou pour des véhicules automobiles, notamment à la réalisation de toits ouvrants en verre pour véhicules de tourisme.

Dans la demande de brevet EP 253 713 au nom de la demanderesse, il est décrit un vitrage à transmission lumineuse variable par application d'une différence de potentiel électrique comportant successivement une première feuille de verre, une couche électroconductrice transparente par exemple à base d'oxyde d'indium dopé à l'étain, une couche d'oxyde de tungstène - matériau transparent qui prend une coloration bleu-nuit par insertion de protons -, une couche électrolytique constituée par un matériau organique conducteur protonique notamment du type solution d'un acide fort dans un polymère organique, une seconde couche électroconductrice et enfin une autre feuille de verre. Ce type de vitrage peut être obtenu à partir de techniques éprouvées de l'industrie de transformation du verre, telles que les techniques de dépôt de couches minces par pulvérisation réactive assistée d'un champ magnétique et les techniques de feuilletage par scellage à l'autoclave ; en conséquence ils sont susceptibles d'être préparés à des coûts compatibles avec des produits grand public et selon des surfaces importantes de l'ordre du mètre carré ou plus, alors que les applications envisagées des vitrages électrochromes sont le plus souvent limitées à l'affichage notamment horloger et aux techniques d'optique de précision.

Toutefois, la longévité de tels systèmes électrochromes est très faible, des microbulles probablement dues à la formation d'hydrogène apparaissant après quelques dizaines de cycles de fonctionnement. Ces microbulles sont gênantes car dans un système fermé tel un vitrage feuilleté elles ne peuvent être éliminées que par échange avec l'air ambiant.

Une amélioration sensible apparaît si on intercale dans le système précédemment décrit une contre-électrode qui est susceptible d'accepter les protons lors de la phase de décoloration et de les libérer lors des phases de coloration. Dans la demande de brevet EP 253 713 précitée, il est ainsi proposé d'utiliser à titre de contre-électrode une couche de palladium par exemple déposée par évaporation thermique. Dans ces conditions la longévité du système est accrue d'environ un facteur 10. Toutefois pour être efficace, la couche de palladium doit avoir une épaisseur supérieure à 10 nanomètres et dans ces conditions la transmission lumineuse du vitrage est toujours inférieure à 15 % ce qui est bien insuffisant par exemple pour un vitrage de bâtiment.

D'autre part, on connaît du brevet US 4 350 414 un système électrochromique tout solide constitué par un empilement sur un substrat transparent par exemple en verre d'une série de couches minces : une première couche conductrice transparente, une couche de matériau électrochrome de type oxyde de tungstène, une couche diélectrique de pentoxyde de tantale, une couche d'hydroxyde d'iridium et/ou de nickel déposée en présence de vapeur d'eau et une seconde couche conductrice transparente. L'insertion d'une couche d'hydroxyde d'iridium de 50 à 5000 Angstroems améliore sensiblement la variation de la densité optique du système par définition égale au logarithme du rapport des transmissions avant coloration et après coloration et appelée de façon impropre densité optique dans le texte cité ci-dessus. En d'autres termes, la couche d'hydroxyde d'iridium contribue à un meilleur contraste. Toutefois un tel système est très fragile car la dernière couche déposée est apparente, aussi le système ne peut être utilisé que dans un ensemble protégé par encapsulation comme une montre ou autre dispositif d'affichage. De plus de tels systèmes tout solide sont fréquemment le siège de court-circuits dus à la présence de trous ou de craquelures dans la couche diélectrique comme indiqué dans le brevet cité pour des couches de pentoxyde de tantale supérieures à 5 microns. Il va de soi que la probabilité d'une discontinuité de la couche est d'autant plus forte que la surface de dépôt est grande, aussi en pratique un tel système ne peut fonctionner qu'en choisissant des plaques de verre de très petites dimensions, en général de l'ordre du centimètre carré et n'est donc pas compatible avec des applications grande surface.

Enfin, dans l'article de M. SF. COGAN, T.D. Plante, RS. Mc FADDEN et RD. RAUH paru dans "Solar Energy Materials", volume 16 - 1987 - pages 371-382, il est décrit un système électrochrome du type WO₃/poly(AMPs)/IrO₂.

La couche d'oxyde d'iridium est préparée selon une technique par radio-fréquence dite de Kang and Shay, qui a pour inconvénient de provoquer un échauffement important du substrat. Pour une tenue suffisante des couches, le substrat doit être refroidi pendant le dépôt, par exemple en le plaçant sur une plaque refroidie à l'eau. Cette technique dite de Kang and Shay est donc en pratique réservée à des échantillons de laboratoire de seulement quelques centimètres/carré.

Par ailleurs, pour que le système fonctionne correctement, il est nécessaire que la couche d'oxyde d'iridium soit protonée dans son état initial. Dans le cas de l'article précité, cette protonation est effectuée par un formatage électrochimique ce qui suppose que la couche est trempée dans un bain acide et doit être lavée pour retirer toute trace d'acide avant d'être incorporée à un système électrochrome. La nécessite d'un tel lavage exclut l'application industrielle du procédé.

L'invention a pour objet un vitrage à variation contrôlée de la transmission lumineuse par une commande électrique, ayant une longévité compatible avec celle d'un vitrage ordinaire, c'est-à-dire ne présentant pas de dégradation de son aspect après un nombre important de cycles coloration/décoloration.

Ce problème est résolu conformément à la revendication 1 par un vitrage à transmission variable du type électrochrome comportant deux substrats transparents, notamment deux feuilles de verre, assemblés par un polymère organique dont la conductivité protonique à 20°C est supérieure ou égale à 10⁻⁵ Ohm⁻¹.cm⁻¹, revêtus sur les faces d'assemblage de couches électroconductrices transparentes, un des substrats de verre étant en outre revêtu d'une couche de matériau électrochrome notamment d'oxyde de tungstène, en contact avec ledit polymère conducteur protonique ; ce vitrage étant caractérisé par une couche d'oxyde d'iridium, déposée sur le second substrat transparent et en contact elle-même avec le polymère conducteur protonique, déposée par pulvérisation réactive à partir d'une cible d'iridium métallique, en présence d'hydrogène et d'oxygène. Cette couche d'oxyde d'iridium sert de contre-électrode à la couche de matériau électrochrome à base d'oxyde de tungstène. En effet, elle reçoit les protons libérés en phase de décoloration et les restitue en phase de coloration, le polymère conducteur protonique jouant alors essentiellement un rôle de milieu de transfert des protons. Ainsi, on limite fortement le phénomène de recombinaison des protons avec en corollaire une diminution du risque de formation de molécules d'hydrogène.

La contre-électrode selon l'invention est de plus obtenue par une technique industrielle, analogue à la technique déjà utilisée pour la couche d'oxyde de tungstène.

De manière particulièrement avantageuse, l'interposition de cette couche d'oxyde d'iridium permet d'accroître de façon très importante la longévité du vitrage qui peut subir plus de 20 000 cycles coloration/décoloration sans aucune dégradation d'aspect, ce qui correspond par exemple à 6 usages quotidiens pendant 10 ans et est donc parfaitement adapté à son utilisation en tant que vitrage dit "intelligent" permettant un meilleur contrôle des apports thermiques en fonction de l'ensoleillement.

De préférence la couche d'oxyde d'iridium est déposée par pulvérisation cathodique avec une cible d'iridium en présence d'une faible pression d'oxygène et d'hydrogène, le pourcentage d'hydrogène dans le mélange étant de préférence compris entre 10 et 30 %. Son épaisseur est de préférence comprise entre 200 et 1000 Angstroems.

Les couches électroconductrices transparentes, déposées sur les substrats transparents constitués de préférence par des feuilles de verre de 1 à 6 mm d'épaisseur, sont de préférence des couches très conductrices, dont la résistance carrée est inférieure à 10 Ohms et de préférence inférieure ou égale à 5 0hms. Plus les dimensions du vitrage sont grandes et plus il est avantageux d'opérer avec des couches de faibles résistivités. Conviennent par exemple comme couches électroconductrices, des couches à base d'oxyde d'étain dopé au fluor ou à base d'oxyde d'indium dopé à l'étain ; ces couches peuvent être déposées par pyrolyse de poudre ou par pulvérisation cathodique assistée ou non d'un champ magnétique.

Selon l'invention, on utilise à titre d'électrolyte un polymère conducteur protonique dont la conductivité protonique à 20°C est supérieure ou égale à 10⁻⁵ Ohms⁻¹.cm⁻¹. Les critères de sélection d'un tel polymère sont définis dans la demande de brevet EP 253 713. De préférence, on utilise un complexe acide phosphorique-poly(oxyéthylène) avec un rapport O/H du nombre d'atomes d'oxygène du polymère sur le nombre d'atomes d'hydrogène de l'acide compris entre 0,2 et 1. La masse moléculaire du poly(oxyéthylène) est de préférence comprise entre 1 000 000 et 5 000 000.

La couche de matériau électrochrome est de préférence à base d'oxyde de tungstène encore que d'autres oxydes notamment l'oxyde de vanadium ou l'oxyde de molybdène connus pour leur caractère électrochrome puissent également être utilisés. Elle est déposée sur le substrat transparent revêtu d'une couche électroconductrice transparente par évaporation sous vide ou pulvérisation cathodique assistée éventuellement par un champ magnétique.

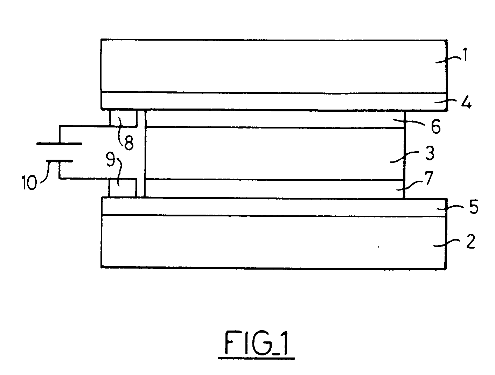

A titre d'exemple on a préparé un vitrage feuilleté, schématisé à la figure 1 qui comporte deux feuilles de verre 1, 2 assemblées par un polymère organique 3. La feuille de verre 1 est revêtue d'une couche électroconductrice transparente 4 formant une première électrode. De même la feuille de verre 2 est revêtue d'une couche électroconductrice transparente 5 formant la seconde électrode. De plus la feuille de verre 1 comporte une couche 6 de matériau électrochrome en contact avec la couche organique 3 alors que la feuille de verre 2 comporte une couche 7 d'oxyde d'iridium, de l'autre côté de la couche organique 3. Les couches électroconductrices 4 et 5 sont munies d'amenées de courant 8 et 9 liées à un générateur 10.

Les caractéristiques de ces couches sont les suivantes

### - Substrats (1 et 2) :

. feuille de verre float de 3 mm d'épaisseur,

### - Couches électroconductrices transparentes (4 et 5) :

. Couche d'oxyde d'indium dopé à l'étain, déposée par pulvérisation cathodique magnétron,
. Epaisseur 400 nm,
. Résistance carrée 5 Ohms.

### - Couche électrochrome (6) :

. Couche d'oxyde de tungstène déposée par évaporation thermique dans un creuset de molybdène sous une pression d'air de 5 x 10⁻⁵ torr.
. Epaisseur 260 nm

### - Electrolyte (polymère organique 3) :

. Solution solide d'acide phosphorique anhydre dans du poly(oxyéthylène).
. Préparation :
   . Dans des conditions rigoureusement anhydres, on dissout par litre de solvant de l'acide phosphorique (17,5g) normapur et du poly(oxyéthylène) de masse moléculaire égale à 5 000 000 (densité 1,21, température de transition vitreuse -40° C, rapport O/H du nombre d'atomes d'oxygène du polymère sur le nombre d'atomes d'hydrogène de l'acide égal à 0,66). Le solvant commun est par exemple un mélange 50-50 d'acétonitrile et de tétrahydro-furanne.
      La solution est coulée sur une plaque de verre revêtue d'une couche d'oxyde de tungstène déposée comme indiqué précédemment. L'épaisseur uniforme est obtenue par la méthode du tire-fil. La coulée est effectuée sous une atmosphère à taux d'humidité contrôlé. Après évaporation du solvant, on obtient un film de 50 micromètres dont la conductivité à 20° C est de 9.10⁻⁵ Ohm.⁻¹.cm⁻¹ et dont la transmission lumineuse est supérieure à 85 %. Le taux d'humidité au moment de la coulée doit être de préférence compris entre 40 et 100 ppm ce qui permet d'obtenir ultérieurement un contraste optimal.

### - Couche d'oxyde d'iridium (7) :

. Couche déposée par pulvérisation cathodique assistée par un champ magnétique, sous une pression de 6 millitorrs d'un mélange gazeux oxygène/hydrogène (dans un rapport de 80-20),
. Epaisseur 55 nanomètres.

De préférence la couche organique est déposée sur la couche d'oxyde de tungstène dans un bref délai après le dépôt de celle-ci. L'assemblage du vitrage est effectué à l'autoclave à une température de 85° C sous une pression de 10 kg/cm².

Les performances sont indiquées ci-après ; les premières valeurs sont obtenues en coloration, les secondes à l'état non coloré :

| | |
|---|---|
| - durée de vie | supérieure à 20 000 cycles, |
| - temps de commutation | inférieur à 20 secondes, |
| - tension d'alimentation | 1,5 volt en coloration, 0,6 volt en décoloration, |
| - transmission lumineuse | 15 % - 62 %, |
| - transmission énergétique | 11 % - 48 %, |
| - facteur solaire | 31 % - 58 %, |
| - réflexion lumineuse | 10 % - 12 %, |
| - réflexion énergétique | 12 % - 12 %, |
| - couleur en transmission | état coloré bleu-nuit - état décoloré neutre. |

Il a également été réalisé un second vitrage en tout point identique au précédent, sauf pour ce qui concerne la couche d'oxyde de tungstène déposée cette fois par pulvérisation cathodique réactive assistée d'un champ magnétique. Cette seconde technique de dépôt est préférée dans la mesure où elle permet d'utiliser la même installation pour le dépôt de la couche d'iridium. Les conditions de dépôt sont les suivantes :

| | |
|---|---|
| - cible | tungstène, |
| - atmosphère | argon 93 % - oxygène 7 %, |
| - pression | 40 m Torr, |
| - puissance | 0,8 Watt/cm², |
| - épaisseur WO₃ | 350 nm. |

Les performances obtenues sont alors :

| | |
|---|---|
| - temps de commutation | inférieur à 20 secondes, |
| - tension d'alimentation | 1,5 volt en coloration - 0,5 volt en décoloration, |
| - transmission lumineuse | 10 % - 55 %, |
| - réflexion lumineuse | 11 % - 12 %, |
| - couleur en transmission | état coloré bleu-nuit - état décoloré neutre. |

Après 10 000 cycles, le vitrage ne présente aucune altération de ses performances.

Un tel vitrage peut être utilisé comme vitrage de bâtiment ou comme vitrage automobile notamment pour les vitres latérales ou la lunette arrière. Il est tout particulièrement avantageux comme toit ouvrant, les passagers du véhicule pouvant commander à volonté la transmission lumineuse du vitrage en fonction notamment de l'ensoleillement.

## Revendications

1. Vitrage à transmission variable du type électrochrome comportant deux substrats transparents constitués notamment par des feuilles de verre (1, 2) assemblés par un polymère organique (3) dont la conductivité protonique à 20°C est supérieure ou égale à 10⁻⁵ Ohm⁻¹.cm⁻¹, revêtus sur les faces d'assemblage de couches électroconductrices transparentes (4, 5), le substrat transparent (1) comportant en outre une couche (6) de matériau électrochrome notamment d'oxyde de tungstène, en contact avec le polymère conducteur protonique (4), ledit vitrage étant **caractérisé en ce que** le second substrat transparent (2) comporte également une couche (7) d'oxyde d'iridium, symétrique de la couche de matériau électrochrome (6) par rapport au polymère organique (3), déposée par pulvérisation réactive à partir d'une cible d'iridium métallique, en présence d'hydrogène et d'oxygène.

2. Vitrage selon la revendication 1, **caractérisé en ce que** le polymère conducteur protonique (4) est une solution solide d'acide phosphorique anhydre dans du poly-(oxyéthylène).

3. Vitrage selon la revendication 1 ou 2, **caractérisé en ce que** la résistance carrée des couches électroconductrices transparentes (4, 5) est inférieure à 10 Ohms.

4. Vitrage selon la revendication 2 ou 3, **caractérisé en ce que** les couches électroconductrices (4, 5) sont à base d'oxyde d'indium dopé à l'étain ou à base d'oxyde d'étain dopé au fluor.

5. Vitrage selon l'une des revendications précédentes, **caractérisé en ce que** le polymère conducteur protonique est une solution solide d'acide phosphorique anhydre dans du poly(oxyéthylène), de masse moléculaire comprise entre 1000000 et 5000000, le rapport O/H du nombre d'atomes d'oxygène du polymère sur le nombre d'atomes d'hydrogène de l'acide étant compris entre 0,4 et 1.

6. Vitrage selon l'une des revendications précédentes, **caractérisé en ce que** la couche (6) de matériau électrochrome est une couche d'oxyde de tungstène déposée par pulvérisation réactive assistée d'un champ magnétique.

7. Vitrage selon l'une des revendications précédentes, **caractérisé en ce que** la couche (6) de matériau électrochrome est une couche d'oxyde de tungstène déposée par évaporation thermique.

8. Vitrage selon l'une des revendications précédentes, **caractérisé en ce que** la couche d'oxyde d'iridium a une épaisseur comprise entre 200 et 1000 Angstroems.

9. Application du vitrage selon l'une des revendications précédentes, à la réalisation d'un toit ouvrant pour véhicule automobile.

## Claims

1. Pane with variable transmission of the electrochromic type, comprising two transparent substrates constituted, notably, of glass sheets (1, 2) joined together by an organic polymer (3), the protonic conductivity of which at 20°C is greater than or equal to 10⁻⁵ ohm⁻¹.cm⁻¹, coated on both the jointing faces with transparent electrically conducting films (4, 5), the transparent substrate (1) possessing, in addition, a film (6) of electrochromic material, notably tungsten oxide, in contact with the protonic conducting polymer (4), said pane being characterized in that the second transparent substrate (2) also possesses a film (7) of iridium oxide, symmetrical with the film of electrochromic material (6) about the organic polymer (3), and deposited by reactive sputtering from a metallic iridium target in the presence of hydrogen and oxygen.

2. Pane according to Claim 1, characterized in that the protonic conducting polymer (4) is a solid solution of anhydrous phosphoric acid in poly-(oxyethylene).

3. Pane according to Claim 1 or 2, characterized in that the square resistance of the transparent electrically conducting films (4, 5) is less than 10 ohms.

4. Pane according to Claim 2 or 3, characterized in that the electrically conducting films (4, 5) are based upon indium oxide doped with tin or based upon tin oxide doped with fluorine.

5. Pane according to one of the preceding Claims, characterized in that the protonic conductive polymer is a solid solution of anhydrous phosphoric acid in poly(oxyethylene) of molecular weight between 1,000,000 and 5,000,000, the O/H ratio of the number of oxygen atoms of the polymer to the number of hydrogen atoms of the acid being from 0.4 to 1.

6. Pane according to one of the preceding Claims, characterized in that the film (6) of electrochromic material is a film of tungsten oxide deposited by reactive sputtering assisted by a magnetic field.

7. Pane according to one of the preceding Claims, characterized in that the film (6) of electrochromic material is a film of tungsten oxide deposited by thermal evaporation.

8. Pane according to one of the preceding Claims, characterized in that the film of iridium oxide has a thickness of from 200 to 1,000 Angstrom units.

9. Application of the pane according to one of the preceding Claims to the construction of an opening roof for an automobile vehicle.

## Patentansprüche

1. Elektrochrome Verglasung mit veränderlicher Lichtdurchlässigkeit, welche zwei, insbesondere aus Glasscheiben (1, 2) bestehende durchsichtige Trägermaterialien umfaßt, die durch ein organisches Polymer (3) verbunden sind, dessen Protonenleitfähigkeit bei 20 °C größer oder gleich 10⁻⁵ Ohm⁻¹ . cm⁻¹ ist, und deren Verbindungsflächen mit elektrisch leitenden, durchsichtigen Schichten (4, 5) beschichtet sind, das durchsichtige Trägermaterial (1) außerdem eine Schicht (6) aus elektrochromem Material, insbesondere Wolframoxid, enthält, die sich mit dem protonenleitenden Polymer (4) in Berührung befindet, und diese Verglasung **dadurch gekennzeichnet** ist, daß das andere durchsichtige Trägermaterial (2) in gleicher Weise eine Iridiumoxidschicht (7) aufweist, die durch Reaktionszerstäubung aus einem Iridiumtarget in Gegenwart von Wasserstoff und Sauerstoff abgeschieden und zur Schicht (6) aus elektrochromem Material, bezogen auf das organische Polymer (3), symmetrisch ist.

2. Verglasung nach Anspruch 1, **dadurch gekennzeichnet**, daß das protonenleitende Polymer (4) eine feste Lösung von wasserfreier Phosphorsäure in Polyoxyethylen ist.

3. Verglasung nach Anspruch 1 oder 2, **dadurch gekennzeichnet**, daß der Flächenwiderstand der elektrisch leitenden, durchsichtigen Schichten (4, 5) weniger als 10 Ohm beträgt.

4. Verglasung nach Anspruch 2 oder 3, **dadurch gekennzeichnet,** daß die elektrisch leitenden Schichten (4, 5) mit Zinn dotiertes Indiumoxid oder mit Fluor dotiertes Zinnoxid zur Grundlage haben.

5. Verglasung nach einem der vorhergehenden Ansprüche, **dadurch gekennzeichnet**, daß das protonenleitende Polymer eine feste Lösung von wasserfreier Phosphorsäure in Polyoxyethylen ist, dessen relative Molmasse zwischen 1.000.000 und 5.000.000 liegt und dessen Verhältnis von O/H der Anzahl der Sauerstoffatome des Polymers zur Anzahl der Wasserstoffatome der Säure zwischen 0,4 und 1 beträgt.

6. Verglasung nach einem der vorhergehenden Ansprüche, **dadurch gekennzeichnet**, daß die Schicht (6) aus elektrochromem Material eine Wolframoxidschicht ist, die durch Reaktionszerstäubung in einem Magnetfeld abgeschieden worden ist.

7. Verglasung nach einem der vorhergehenden Ansprüche, **dadurch gekennzeichnet**, daß die Schicht (6) aus elektrochromem Material eine durch thermisches Verdampfen abgeschiedene Wolframoxidschicht ist.

8. Verglasung nach einem der vorhergehenden Ansprüche, **dadurch gekennzeichnet**, daß die Dicke der Iridiumoxidschicht zwischen 20 und 100 Nanometern liegt.

9. Verwendung der Verglasung nach einem der vorhergehenden Ansprüche zur Herstellung eines Schiebedachs für Kraftfahrzeuge.
